# FASCICULE DE BREVET EUROPEEN

(11) **EP 3 408 226 B1**
(45) Date de publication et mention de la délivrance du brevet: **17.03.2021**
(21) Numéro de dépôt: 17700716.8
(22) Date de dépôt: 20.01.2017
(51) Int. Cl.: C01F 7/34

(54) **PROCEDE DE PREPARATION D'UN GEL D'ALUMINE PRESENTANT UNE HAUTE DISPERSIBILITE ET UNE TAILLE DE CRISTALLITE SPECIFIQUE**
VERFAHREN ZUR HERSTELLUNG EINES ALUMINIUMOXIDGELS MIT HOHER DISPERGIERBARKEIT UND EINER SPEZIFISCHEN KRISTALLITGRÖSSE
METHOD FOR PRODUCING AN ALUMINA GEL HAVING A HIGH DISPERSIBILITY AND A SPECIFIC CRYSTALLITE SIZE

(30) Priorité: 29.01.2016 FR 1650747
(43) Date de publication de la demande: 05.12.2018
(73) Titulaire: IFP Energies nouvelles, 92500 Rueil-Malmaison (FR)
(72) Inventeur: BOUALLEG, Malika, 69100 Villeurbanne (FR); LAFON, Olivier, 69007 Lyon (FR)
(74) Mandataire: IFP Energies nouvelles
(86) Numéro de dépôt international: PCT/EP2017/051258
(87) Numéro de publication internationale: WO 2017/129497

(56) Documents cités:
- WO-A1-2015/189203
- GB-A- 2 123 804
- SATO T: "PREPARATION OF GELATINOUS ALUMINIUM HYDROXIDE", ZEITSCHRIFT FUR ANORGANISCHE UND ALLGEMEINE CHEMIE, WILEY - V C H VERLAG GMBH & CO. KGAA, DE, vol. 391, no. 1, juillet 1972 (1972-07), pages 69-78, XP001188381, ISSN: 0044-2313, DOI: 10.1002/ZAAC.19723910109

## Description

### DOMAINE TECHNIQUE DE L'INVENTION

La présente invention se rapporte à la préparation de gels d'alumine ou gels de boehmite. En particulier, la présente invention se rapporte à un procédé de préparation de gels d'alumine comportant une seule étape de précipitation consistant en la mise en solution dans l'eau du précurseur acide d'aluminium spécifique, le chlorure d'aluminium, à une température comprise entre 10 et 90°C, de sorte que le pH de la solution soit compris entre 0,5 et 5, pendant une durée comprise entre 2 et 60 minutes puis en l'ajustement du pH à un pH compris entre 7,5 et 9,5 par ajout dans la solution obtenue d'un précurseur basique spécifique, l'hydroxyde de sodium, pour obtenir une suspension, à une température comprise entre 5 et 35°C, et pendant une durée comprise entre 5 minutes et 5 heures, suivie d'une étape de filtration de la suspension obtenue pour obtenir un précipité, ledit procédé ne comportant pas d'étape de lavage après ladite étape de filtration.

Le procédé selon l'invention permet l'obtention d'un gel d'alumine présentant une haute dispersibilité et une taille de cristallite réduite.

Ce gel d'alumine présente un indice de dispersibilité élevé, et en particulier un indice de dispersibilité supérieur à 80%, une taille de cristallite obtenue par la formule de Scherrer en diffraction des rayons X selon les directions cristallographiques [020] et [120] respectivement comprise entre 0,5 et 10 nm et entre 0,5 et 15 nm, ainsi qu'une teneur en chlore comprise entre 0,001% et 2% poids et une teneur en sodium comprise entre 0,001% et 2 % poids, les pourcentages poids étant exprimés par rapport à la masse totale de gel d'alumine.

Le gel d'alumine ainsi préparé peut ensuite avantageusement être mis en forme pour être utilisé comme support de catalyseur dans de nombreux procédés de raffinage. Dans le cas où le gel d'alumine est mis en forme sous forme de billes d'alumine, elles peuvent être utilisées comme support de catalyseur dans les procédés d'oligomérisation ou de reformage catalytique. Les billes d'alumine ainsi obtenues, peuvent également être utilisées comme adsorbant.

### ART ANTÉRIEUR

Plusieurs protocoles opératoires connus dans l'art antérieur conduisent à des gels d'alumine dispersibles. Plusieurs brevets décrivent notamment un procédé de préparation dit "sol-gel".

Le brevet US 4 676 928 décrit un procédé de production d'une alumine dispersible dans l'eau comprenant une étape de formation d'une dispersion aqueuse d'alumine, une étape d'ajout d'un acide pour produire une dispersion acide ayant un pH compris entre 5 et 9, une étape de maturation à une température élevée supérieure à 70°C pendant une durée suffisante pour transformer l'alumine en gel colloïdal, puis une étape de séchage dudit gel colloïdal obtenu.

Le brevet US 5 178 849 décrit également un procédé de production d'une alumine alpha comprenant une étape de dispersion d'un hydrate d'aluminium ayant une dispersibilité inférieure à 70%, une étape d'acidification de la dispersion obtenue à un pH inférieur à 3,5 pour dissoudre au moins partiellement l'hydrate d'aluminium, une étape de traitement hydrothermal de la dispersion acide obtenue à une température comprise entre 150 et 200°C, un pression comprise entre 5 et 20 atm pendant une durée comprise entre 0,15 et 4 heures pour obtenir une boehmite colloïdale présentant une dispersibilité supérieure à 90%.

La préparation de gel d'alumine par précipitation est également bien connue dans l'art antérieur.

En particulier, le brevet US 7 790 652 décrit la préparation par précipitation d'un support alumine présentant une distribution poreuse bien spécifique, pouvant être utilisé comme support de catalyseur dans un procédé d'hydroconversion de charges hydrocarbonées lourdes.

Le support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C.

Le document WO 2015/189203 se rapporte à la préparation de gels d'alumine à l'issue d'une unique étape de précipitation, suivie d'une étape de traitement thermique et d'une étape de mûrissement finale permettant l'obtention d'un gel d'alumine présentant une filtrabilité améliorée, permettant donc une meilleure productivité.

Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique.

De même, le pH est réglé entre 8 et 10,5 par les proportions des solutions acide et basique ajoutées et la quantité restante d'alumine à former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de traitement hydrothermal préalable, pour produire une poudre d'alumine qui est ensuite mise en forme selon les méthodes connues de l'homme du métier puis calciné pour produire le support alumine final.

La demanderesse a ainsi découvert qu'un procédé de préparation d'un gel d'alumine en seule étape de précipitation, ladite étape consistant en la mise en solution d'un précurseur acide d'aluminium spécifique, le chlorure d'aluminium, suivie d'un ajustement du pH au moyen d'un précurseur basique spécifique, l'hydroxyde de sodium, sans étape de co-précipitation ultérieure, conduisait à un gel d'alumine présentant des cristallites de faible taille.

En particulier, le procédé de préparation selon l'invention permet l'obtention de gel d'alumine ou de boehmite composée de cristallites dont la taille, obtenue par la formule de Scherrer en diffraction des rayons X selon les directions cristallographiques [020] et [120] est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 et entre 0,5 et 2,5.

Par ailleurs, le nouveau procédé de préparation selon l'invention est également caractérisé par l'absence de lavage du précipité obtenu à l'issue de l'étape de précipitation, après filtration dudit précipité.

En effet, la demanderesse a également découvert que la mise en œuvre des conditions opératoires spécifiques de pH, et de températures de l'étape a) de précipitation, combinée avec l'absence de lavage du précipité obtenu à l'issue de l'étape de précipitation, après filtration permet non seulement l'obtention d'un gel d'alumine présentant des cristaux de petite taille mais également l'obtention d'un gel d'alumine présentant une dispersibilité très élevée, de préférence supérieure à 80% et pouvant même atteindre 100%.

Ledit procédé selon l'invention permet donc l'obtention d'un gel d'alumine présentant un meilleur indice de dispersibilité par rapport aux gels d'alumine de l'art antérieur, facilitant ainsi sa mise en forme selon les techniques connues de l'homme du métier.

L'absence d'étape de lavage, permet également une économie d'eau substantielle, une meilleure productivité du procédé selon l'invention ainsi qu'une extrapolation du procédé au niveau industriel plus aisée.

### RESUME ET INTERET DE L'INVENTION

L'invention concerne un procédé de préparation d'un gel alumine en une seule étape a) de précipitation, ladite étape de précipitation consistant en la mise en solution du précurseur acide d'aluminium le chlorure d'aluminium dans l'eau, à une température comprise entre 10 et 90°C, de sorte que le pH de la solution soit compris entre 0,5 et 5, pendant une durée comprise entre 2 et 60 minutes puis en l'ajustement du pH à un pH compris entre 7,5 et 9,5 par ajout dans la solution obtenue d'un précurseur basique, l'hydroxyde de sodium, pour obtenir une suspension, à une température comprise entre 5 et 35°C, et pendant une durée comprise entre 5 minutes et 5 heures, une étape b) de filtration de la suspension obtenue à l'issue de l'étape a), ledit procédé ne comprenant pas d'étape de lavage du précipité obtenu à l'issue de l'étape b) de filtration.

Un avantage de la présente invention est de fournir un procédé de préparation permettant l'obtention d'un gel d'alumine présentant une taille de cristallites réduite par rapport aux gels d'alumine préparés selon l'art antérieur et en particulier présentant des cristallites de faible taille.

Un autre avantage de la présente invention est de fournir un procédé de préparation d'un gel d'alumine permettant, grâce à la mise en œuvre des conditions opératoires spécifiques de pH, et de températures de l'étape a) de précipitation, combinée avec l'absence de lavage du précipité obtenu à l'issue de l'étape de précipitation, après filtration, non seulement l'obtention d'un gel d'alumine présentant des cristaux de petite taille mais également l'obtention d'un gel d'alumine présentant une dispersibilité très élevée, de préférence supérieure à 80% et pouvant même atteindre 100%.

Un autre avantage de la présente invention est de fournir un procédé de préparation d'un gel d'alumine présentant une taille de cristallites réduite, simplifié et peu coûteux par rapport aux procédés de préparation d'alumine classique de l'art antérieur tel que par exemple les procédés de préparation de type sol-gel, en ce que le procédé selon l'invention ne comprenant qu'une seule étape de précipitation et ne comprend pas d'étape de lavage du précipité obtenu.

Le gel d'alumine ainsi préparé présente un indice de dispersibilité élevé, et en particulier un indice de dispersibilité supérieur à 80%, une taille de cristallite obtenue par la formule de Scherrer en diffraction des rayons X selon les directions cristallographiques [020] et [120] respectivement comprise entre 0,5 et 10 nm et entre 0,5 et 15 nm, ainsi qu'une teneur en chlore comprise entre 0,001% et 2% poids et une teneur en sodium comprise entre 0,001% et 2 % poids, les pourcentages poids étant exprimés par rapport à la masse totale de gel d'alumine.

Un avantage de l'invention est de fournir un gel d'alumine présentant une dispersibilité très élevée par rapport aux gels d'alumine de l'art antérieur.

Un gel d'alumine caractérisé par un indice de dispersibilité élevée sera plus facilement mis en forme selon toutes les techniques de mise en forme connues de l'homme du métier telles que par exemple par malaxage-extrusion, par granulation ou par la technique de l'oil drop, qu'un gel présentant un indice de dispersibilité faible.

### DESCRIPTION DE L'INVENTION

La présente invention a pour objet la préparation d'un gel d'alumine présentant un indice de dispersibilité élevé, et en particulier un indice de dispersibilité supérieur à 80%, une taille de cristallite obtenue par la formule de Scherrer en diffraction des rayons X selon les directions cristallographiques [020] et [120] respectivement comprise entre 0,5 et 10 nm et entre 0,5 et 15 nm, ainsi qu'une teneur en chlore comprise entre 0,001% et 2% poids et une teneur en sodium comprise entre 0,001% et 2 % poids, les pourcentages poids étant exprimés par rapport à la masse totale de gel d'alumine.

Dans toute la suite du texte, le indice de dispersibilité est défini comme le poids de gel d'alumine peptisée que l'on peut disperser par centrifugation dans un tube en polypropylène à 3500G pendant 3 min.

La dispersibilité est mesuré en dispersant 10% de boehmite ou gel d'alumine dans une suspension d'eau contenant également 10% d'acide nitrique par rapport à la masse de boehmite. Puis, on centrifuge la suspension à 6000 rpm pendant 10 min. Les sédiments recueillis sont séchés à 100°C une nuit puis pesés.

On obtient le taux de dispersibiltié, noté ID par le calcul suivant : ID(%)=100%-masse de sédiments séchés(%).

Dans toute la suite du texte, la diffraction des rayons X sur les gels d'alumine ou boehmites a été effectuée en utilisant la méthode classique des poudres au moyen d'un diffractomètre. La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

De préférence, le gel d'alumine préparé selon l'invention présente un indice de dispersibilité compris entre 80 et 100%, de manière préférée entre 85 et 100%, de manière très préférée entre 88 et 100% et de manière encore plus préférée entre 90 et 100%.

Le gel d'alumine ou la boehmite sous forme de poudre préparé selon l'invention est composée de cristallites dont la taille, obtenue par la formule de Scherrer en diffraction des rayons X selon les directions cristallographiques [020] et [120] sont respectivement comprise entre 0,5 et 10 nm et entre 0,5 et 15 nm.

De préférence, le gel d'alumine préparé selon l'invention présente une taille de cristallites selon la direction cristallographique [020] comprise entre 0,5 à 2 nm et une taille de cristallite selon la direction cristallographique [120] comprise entre 0,5 et 3 nm et de manière très préférée respectivement entre 0,5 et 1,5 et entre 0,5 et 2,5.

Conformément à l'invention, le gel de d'alumine préparé selon l'invention présente une teneur en impureté et en particulier en chlore, mesurée par la méthode de fluorescence X, comprise entre 0,001% et 2% poids et une teneur en sodium, mesurée par ICP ou spectrométrie à plasma à couplage inductif comprise entre 0,001 et 2 % poids, les pourcentages poids étant exprimés par rapport à la masse totale de gel d'alumine.

De préférence, le gel d'alumine préparé selon l'invention comprend une teneur en chlore comprise entre 0,001 % et 1% poids, e manière préférée entre 0,001 et 0,70% poids, de manière très préférée entre 0,003 et 0,60 % poids, et de manière plus préférée entre 0,005 et 0,50 % poids.

De préférence, le gel d'alumine préparé selon l'invention comprend une teneur en sodium comprise entre 0,001 % et 1% poids, de manière préférée entre 0,001 et 0,80 % poids, de manière très préférée entre 0,0015 et 0,60% poids, et 0,002 et 0,050 % poids.

### PROCEDE DE PREPARATION

Conformément à l'invention, le procédé de préparation du gel alumine selon l'invention comprend et est de préférence constitué par, une seule étape a) de précipitation, ladite étape de précipitation consistant en la mise en solution du précurseur acide d'aluminium le chlorure d'aluminium dans l'eau, à une température comprise entre 10 et 90°C, de sorte que le pH de la solution soit compris entre 0,5 et 5, pendant une durée comprise entre 2 et 60 minutes puis en l'ajustement du pH à un pH compris entre 7,5 et 9,5 par ajout dans la solution obtenue d'un précurseur basique, l'hydroxyde de sodium, pour obtenir une suspension, à une température comprise entre 5 et 35°C, et pendant une durée comprise entre 5 minutes et 5 heures, une étape b) de filtration de la suspension obtenue à l'issue de l'étape a) pour obtenir un précipité, ledit procédé ne comprenant pas d'étape de lavage du précipité obtenu à l'issue de l'étape b) de filtration, ladite étape de filtration pouvant éventuellement être suivie d'une étape de séchage dudit précipité pour obtenir une poudre d'alumine, et ladite étape de séchage pouvant ensuite éventuellement être suivie d'une étape de mise en forme de ladite poudre d'alumine pour obtenir un matériau cru et ledit matériau cru peut ensuite éventuellement subir à son tour au moins une étape de traitement thermique.

Ladite étape de précipitation consiste en la mise en solution d'un précurseur acide d'aluminium spécifique, le chlorure d'aluminium AlCl₃, dans l'eau, à une température comprise entre 10 et 90°C, de préférence entre 10 et 80°C, de manière préférée entre 10 et 75 °C et de manière plus préférée entre 15 et 70°C. Le pH de la solution obtenue est compris entre 0,5 et 5, de préférence entre 1 et 4, de manière préférée entre 1,5 et 3,5. La solution est laissée sous agitation pendant une durée comprise entre 2 et 60 minutes, et de préférence de 5 à 30 minutes et de manière préférée entre 5 et 10 minutes.

Le pH de la suspension obtenue est ensuite ajusté à un pH appelé pH de fin de précipitation compris entre 7,5 et 9,5, de préférence entre 7,5 et 9 et de manière préférée entre 7,7 et 8,8 par l'ajout d'un précurseur basique spécifique, l'hydroxyde de sodium NaOH à une température comprise entre 5 et 35°C, de préférence entre 10 et 30°C et de manière préférée entre 10 et 25°C et pendant une durée comprise entre 5 minutes et 5 heures, de préférence entre 10 minutes et 5 heures, de manière préférée entre 15 minutes et 2 heures.

L'ajout de NaOH permet de précipiter la boehmite et d'obtenir une suspension.

De préférence, la précipitation est réalisée en l'absence d'additif organique.

De préférence la précipitation du gel d'alumine est opérée sous agitation.

De préférence, le procédé selon l'invention ne comprend pas d'étape supplémentaire de précipitation et ne comprend pas d'étape de co-précipitation ultérieure par mise en contact, en milieu réactionnel aqueux, d'au moins un précurseur basique et d'au moins un précurseur acide, au moins un des précurseurs basique ou acide comprenant de l'aluminium.

Le choix des précurseurs spécifiques associés aux conditions de températures et de pH sélectionnées permettent l'obtention d'un gel d'alumine présentant une taille de cristallites réduite par rapport aux gels d'alumine préparés selon l'art antérieur et en particulier d'un gel d'alumine ou de boehmite composée de cristallites dont la taille, obtenue par la formule de Scherrer en diffraction des rayons X selon les directions cristallographiques [020] et [120] est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 et entre 0,5 et 2,5.

Conformément à l'invention, le procédé de préparation du gel d'alumine selon l'invention comprend également une étape b) de filtration de la suspension obtenue à l'issue de l'étape de précipitation pour obtenir un précipité.

Ladite étape de filtration est réalisée selon les méthodes connues de l'homme du métier.

Conformément à l'invention, le procédé de préparation ne comprend aucune étape de lavage du précipité obtenu à l'issue de l'étape a) de filtration.

Le gel d'alumine obtenu à l'issue de l'étape de précipitation, suivie d'une étape b) de filtration et d'aucune étape de lavage du précipité obtenu, peut ensuite avantageusement être séché dans une étape de séchage dudit précipité obtenue à l'issue de l'étape de filtration pour obtenir une poudre, ladite étape de séchage étant mise en œuvre avantageusement par séchage à une température supérieure ou égale à 100°C ou par atomisation ou par toute autre technique de séchage connue de l'homme du métier.

Dans le cas où ladite étape de séchage est mise en œuvre par séchage à une température supérieure ou égale à 100°C, ladite étape de séchage peut avantageusement être réalisée en étuve fermée et ventilée. De préférence ladite étape de séchage opère à une température comprise entre 100 et 300°C, de manière très préférée à une température comprise entre 120 et 250°C.

Dans le cas où ladite étape de séchage est mise en œuvre par atomisation, le gâteau obtenu à l'issue de l'étape de deuxième précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre.

De préférence, dans le cas où ladite étape de séchage est mise en œuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

La poudre obtenue à l'issue de l'éventuellement étape de séchage peut ensuite avantageusement être mise en forme pour obtenir un matériau cru.

On entend par matériau cru, le matériau mis en forme et n'ayant pas subi d'étapes de traitement thermique.

De préférence, ladite étape de mise en forme peut être réalisée par malaxage-extrusion, par granulation, par la technique de l'oil drop (égouttage ou coagulation de goutte en français), par pastillage.

De manière très préférée, ladite étape de mise en forme est réalisée par malaxage - extrusion ou par égouttage.

Le matériau cru obtenu éventuellement mis en forme peut éventuellement subir ensuite une étape de traitement thermique à une température comprise entre 500 et 1000°C, pendant une durée avantageusement comprise entre 2 et 10 h, en présence ou non d'un flux d'air contenant jusqu'à 60% volume d'eau.

De préférence, ledit traitement thermique est effectué en présence d'un flux d'air contenant de l'eau.

De préférence, ladite étape de traitement thermique opère à une température comprise entre 540°C et 850°C.

De préférence, ladite étape de traitement thermique opère pendant une durée comprise entre 2h et 10h.

Ladite étape de traitement thermique permet la transition de la boehmite vers l'alumine finale.

L'étape de traitement thermique peut éventuellement être précédée d'un séchage à une température comprise entre 50°C et 120°C, selon toute technique connue de l'homme du métier.

Le procédé selon l'invention permet l'obtention d'un gel d'alumine, éventuellement sous forme de poudre, présentant une taille de cristallites réduite par rapport aux gels d'alumine préparés selon l'art antérieur.

En particulier, le gel d'alumine ou la boehmite obtenue sous forme de poudre selon l'invention est composée de cristallites dont la taille, obtenue par la formule de Scherrer en diffraction des rayons X selon les directions cristallographiques [020] et [120] est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 et entre 0,5 et 2,5.

L'invention est illustrée par les exemples suivants qui ne présentent, en aucun cas, un caractère limitatif.

La productivité de la production de la suspension obtenue à l'issue de l'étape a) précipitation est améliorée par l'absence d'une étape de lavages, ce qui favorise la productivité du procédé (économie d'eau et temps de synthèse de la boehmite très inférieurs aux procédés conventionnels) selon l'invention ainsi qu'une extrapolation du procédé au niveau industriel. L'absence de lavage et donc la présence importante de sels à la surface des cristallites de boehmites permettent l'obtention de gel d'alumine présentant un dispersibilité améliorée.

### EXEMPLES :

### Exemple 1 : (comparatif sol gel)

Une poudre commerciale d'un gel d'alumine Pural SB3 est préparée selon une voie sol gel par hydrolyse-polycondensation d'un alcoxyde d'aluminium.

Les caractéristiques de du gel de boehmite Pural SB3 sont résumés dans le tableau 1.

**Tableau 1 : caractéristique de la Pural SB3.**

| | Gel d'alumine commercial |
|---|---|
| Indice de dispersibilité (%) | 98 |
| Taille [020] (nm) | 3,1 |
| Taille [120] (nm) | 4,7 |
| Sodium Na (%pds) | < limite de détection |
| Chlore Cl (%pds) | < limite de détection |

La teneur en chlore est mesurée par la méthode de fluorescence X, et la teneur en sodium est mesurée par ICP ou spectrométrie à plasma à couplage inductif sont inférieures à la limite de détection de ces méthodes de mesure.

Le gel d'alumine obtenu présente un très bon indice de dispersibilité mais une taille de cristallites importante.

### Exemple 2 (comparatif, température élevée sans lavages) :

On prépare un gel d'alumine selon un procédé de synthèse non conforme à l'invention, en ce que la température de précipitation du gel d'alumine est réalisée à une température supérieures à 35°C.

### Précipitation de boehmite AIOOH

Dans un bécher refroidit par un bain de glace, une solution contenant 326 ml d'eau permutée et 135,6 g de chlorure d'aluminium hexahydraté (AlCl₃) est préparée à une température comprise de 55°C, de manière à obtenir une solution ayant un pH de 0,5, pendant une durée de 5 minutes.

Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 55°C pendant toute la durée de l'étape. Le solide est alors filtré.

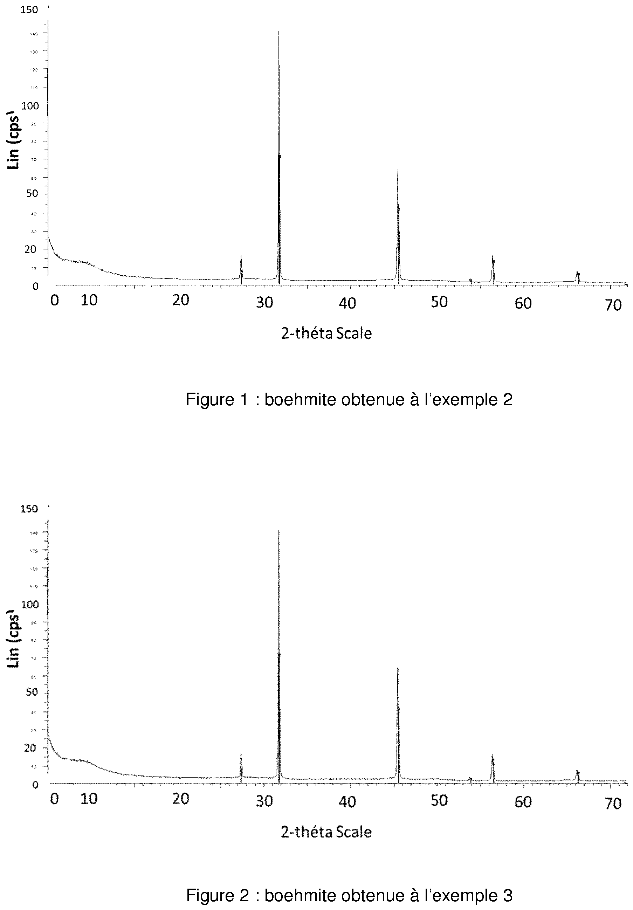

Un échantillon du précipité obtenu est prélevé du milieu réactionnel. La DRX (figure 1) du précipité montre que le précipité obtenu dans l'exemple 2 est bien un précipité de boehmite. Le précipité de boehmite obtenu dans l'exemple 2 est très cristallisé.

La taille des cristallites de la boehmite obtenue est mesurée selon la méthode de Sherrer :
Les caractéristiques du gel obtenu selon l'exemple 2 sont résumés dans le tableau 2.

**Tableau 2 : caractéristique du gel obtenu selon l'exemple 2**

| | Exemple |
|---|---|
| Indice de dispersibilité (%) | 25 |
| Taille [020] (nm) | 2,9 |
| Taille [120] (nm) | 3,6 |
| Sodium Na (%pds) | 1,4 |
| Chlore Cl (%pds) | 1,9 |

Une température de précipitation élevée a conduit à un gel d'alumine présentant une taille de cristallites importante et un indice de dispersibilité médiocre ;

### Exemple 3 (comparatif, pH élevé sans lavages) :

On prépare un gel d'alumine selon un procédé de synthèse non conforme à l'invention, en ce que le pH de fin de précipitation du gel d'alumine est réalisée à un pH supérieur à 9,5.

### Précipitation de boehmite AIOOH

Dans un bécher refroidit par un bain de glace, une solution contenant 326 ml d'eau permutée et 135,6 g de chlorure d'aluminium hexahydraté (AlCl₃) est préparée à une température comprise de 20°C, de manière à obtenir une solution ayant un pH de 0,5, pendant une durée de 5 minutes.

Ensuite sous agitation magnétique, 67,5 g d'hydroxyde de sodium (NaOH) sont ajoutés pendant 30 minutes de manière à ajuster le pH. Le pH atteint en fin de synthèse est de 10,5. La température est maintenue à 20°C pendant toute la durée de l'étape. Le solide est alors filtré.

Un échantillon du précipité obtenu est prélevé du milieu réactionnel. La DRX (figure 2) du précipité montre que le précipité obtenu dans l'exemple 3 est bien un précipité de boehmite. Le précipité de boehmite obtenu dans l'exemple 3 est très cristallisé.

Les caractéristiques du gel obtenu selon l'exemple 3 sont résumés dans le tableau 3.

**Tableau 3 : caractéristique du gel obtenu selon l'exemple 3**

| | Exemple |
|---|---|
| Indice de dispersibilité Ta=10% (%) | 48 |
| Taille [020] (nm) | 2,4 |
| Taille [120] (nm) | 3,1 |
| Sodium Na (%pds) | 1,4 |
| Chlore Cl (%pds) | 1,85 |

Le pH de précipitation élevé a conduit à une taille des cristallites est importante et le gel obtenu présente un indice de dispersibilité médiocre.

### Exemple 4: (comparatif : pH et T conformes mais lavages poussés) :

On prépare un gel d'alumine selon un procédé de synthèse non conforme à l'invention, en ce que des lavages du précipité sont effectuées suite à l'étape de filtration.

### Précipitation de boehmite AIOOH

Dans un bécher refroidit par un bain de glace, une solution contenant 326 ml d'eau permutée et 135,6 g de chlorure d'aluminium hexahydraté (AlCl₃) est préparée à une température de 25°C, de manière à obtenir une solution ayant un pH de 0,5, pendant une durée de 5 minutes.

Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape. Le solide est alors filtré puis lavés avec 3l d'eau déminéralisé.

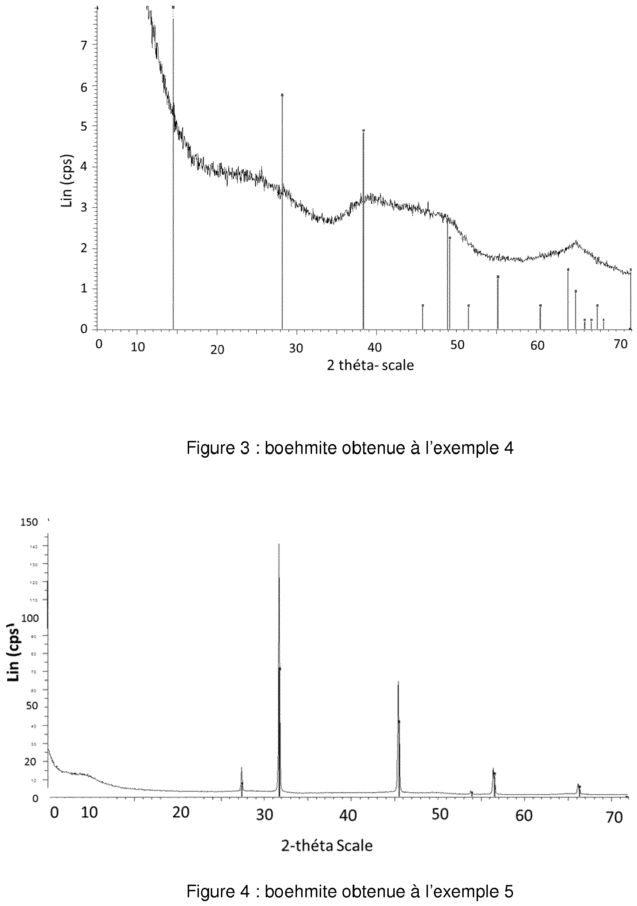

Un échantillon du précipité obtenu est prélevé du milieu réactionnel. La DRX (figure 3) du précipité montre que le précipité obtenu dans l'exemple 4 est bien un précipité de boehmite. Le précipité de boehmite obtenu est peu cristallisé.

Les caractéristiques du gel obtenu selon l'exemple 4 sont résumés dans le tableau 4.

**Tableau 4 : caractéristique du gel obtenu selon l'exemple 4**

| | Exemple |
|---|---|
| Indice de dispersibilité Ta=10% (%) | 30 |
| Taille [020] (nm) | 2,1 |
| Taille [120] (nm) | 2,8 |
| Sodium Na (%pds) | <0,01 |
| Chlore Cl (%pds) | <0,02 |

La taille des cristallites est importante et le gel obtenu présente un indice de dispersibilité médiocre du fait de lavages poussés de précipité obtenu à l'issu de l'étape de précipitation.

### Exemple 5 : (selon l'invention pH et T conformes et pas de lavages) :

On prépare un gel d'alumine selon un procédé de synthèse conforme à l'invention.

### Précipitation de boehmite AIOOH

Dans un bécher refroidit par un bain de glace, une solution contenant 326 ml d'eau permutée et 135,6 g de chlorure d'aluminium hexahydraté (AlCl₃) est préparée à une température de 25°C, de manière à obtenir une solution ayant un pH de 0,5, pendant une durée de 5 minutes.

Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Le précipité est alors filtré mais aucun lavage ne suit cette étape.

Un échantillon du précipité obtenu est prélevé du milieu réactionnel. La DRX (figure 4) du précipité montre que le précipité obtenu dans l'exemple 5 est bien un précipité de boehmite. Le précipité de boehmite obtenu dans l'exemple 5 est peu cristallisé.

Les caractéristiques du gel obtenu selon l'exemple 5 sont résumés dans le tableau 5.

**Tableau 5 : caractéristique du gel obtenu selon l'exemple 5**

| | Exemple |
|---|---|
| Indice de dispersibilité (%) | 100 |
| Taille [020] (nm) | 0,6 |
| Taille [120] (nm) | 1,4 |
| Sodium Na (%) | 1,3 |
| Chlore Cl (%pds) | 1,75 |

Le procédé de préparation selon l'invention permettant l'obtention d'un gel 100% dispersible est également moins couteux que les procédés de préparation d'alumine classique de l'art antérieur tel que par exemple les procédé de préparation de type sol-gel de la Pural SB3 de l'exemple 1. Par ailleurs la taille des cristallites est inférieure à celle obtenue par tout autre mode de préparation de gels d'alumine connue dans la littérature.

## Revendications

1. Procédé de préparation du gel alumine en une seule étape a) de précipitation, ladite étape de précipitation consistant en la mise en solution du précurseur acide d'aluminium le chlorure d'aluminium dans l'eau, à une température comprise entre 10 et 90°C, de sorte que le pH de la solution soit compris entre 0,5 et 5, pendant une durée comprise entre 2 et 60 minutes puis en l'ajustement du pH à un pH compris entre 7,5 et 9,5 par ajout dans la solution obtenue d'un précurseur basique, l'hydroxyde de sodium, pour obtenir une suspension, à une température comprise entre 5 et 35°C, et pendant une durée comprise entre 5 minutes et 5 heures, une étape b) de filtration de la suspension obtenue à l'issue de l'étape a), ledit procédé ne comprenant pas d'étape de lavage du précipité obtenu à l'issue de l'étape b) de filtration.

2. Procédé selon la revendication 1 dans lequel la mise en solution du précurseur acide d'aluminium le chlorure d'aluminium AlCl₃, dans l'eau, est réalisé à une température comprise entre 10 et 75 °C.

3. Procédé selon l'une des revendications 1 ou 2 dans lequel le pH de la solution de chlorure d'aluminium AlCl₃, dans l'eau, est compris entre 1 et 4.

4. Procédé selon l'une des revendications précédentes dans lequel l'ajustement du pH est réalisé à une température comprise entre 10 et 30°C.

5. Procédé de préparation selon la revendication 4 dans lequel l'ajustement du pH est réalisé à une température comprise entre 10 et 25°C.

6. Procédé de préparation selon l'une des revendications précédentes dans lequel l'ajustement du pH est réalisé à un pH compris entre 7,7 et 8,8.

7. Procédé de préparation selon l'une des revendications précédentes dans lequel le procédé de préparation comprend également une étape de séchage de la suspension filtrée obtenue à l'issue de l'étape de précipitation pour obtenir une poudre, ladite étape de séchage étant mise en oeuvre par séchage à une température supérieure ou égale à 100°C ou par atomisation.

8. Procédé de préparation selon la revendication 7 dans lequel le procédé de préparation comprend également une étape de mise en forme de la poudre obtenue pour obtenir un matériau cru.

9. Procédé de préparation selon la revendication 8 dans lequel l'étape de mise en forme est réalisée par malaxage -extrusion ou par égouttage.

10. Procédé de préparation selon l'une des revendications 8 ou 9 dans lequel Le matériau cru mis en forme peut subir ensuite une étape de traitement thermique à une température comprise entre 500 et 1000°C, pendant une durée comprise entre 2 et 10 h, en présence ou non d'un flux d'air contenant jusqu'à 60% volume d'eau.

## Patentansprüche

1. Verfahren zur Herstellung von Aluminiumoxidgel in einem einzigen Fällungsschritt a), der aus Folgendem besteht: Lösen der sauren Aluminium-Vorstufe Aluminiumchlorid in Wasser bei einer Temperatur zwischen 10 und 90 °C derart, dass der pH-Wert der Lösung zwischen 0,5 und 5 liegt, über einen Zeitraum zwischen 2 und 60 Minuten, dann Einstellen des pH-Werts durch Zugabe der basischen Vorstufe Natriumhydroxid zur erhaltenen Lösung auf einen pH-Wert zwischen 7,5 und 9,5 zum Erhalt einer Suspension bei einer Temperatur zwischen 5 und 35 °C und über einen Zeitraum zwischen 5 Minuten und 5 Stunden, und einem Schritt b) der Filtration der am Ende von Schritt a) erhaltenen Suspension, wobei das Verfahren keinen Schritt des Waschens des am Ende des Filtrationsschritts b) erhaltenen Niederschlags umfasst.

2. Verfahren nach Anspruch 1, wobei das Lösen der sauren Aluminium-Vorstufe Aluminiumchlorid AlCl₃ in Wasser bei einer Temperatur zwischen 10 und 75 °C erfolgt.

3. Verfahren nach Anspruch 1 oder 2, wobei der pH-Wert der Lösung von Vorstufe Aluminiumchlorid AlCl₃ in Wasser zwischen 1 und 4 liegt.

4. Verfahren nach einem der vorhergehenden Ansprüche, wobei die Einstellung des pH-Werts bei einer Temperatur zwischen 10 und 30 °C erfolgt.

5. Herstellungsverfahren nach Anspruch 4, wobei die Einstellung des pH-Werts bei einer Temperatur zwischen 10 und 25 °C erfolgt.

6. Herstellungsverfahren nach einem der vorhergehenden Ansprüche, wobei die Einstellung des pH-Werts auf einen pH-Wert zwischen 7,7 und 8,8 erfolgt.

7. Herstellungsverfahren nach einem der vorhergehenden Ansprüche, wobei das Herstellungsverfahren außerdem einen Schritt der Trocknung der am Ende des Fällungsschritts erhaltenen filtrierten Suspension zum Erhalt eines Pulvers, wobei der Trocknungsschritt durch Trocknung bei einer Temperatur größer oder gleich 100 °C oder durch Zerstäubung durchgeführt wird, umfasst.

8. Herstellungsverfahren nach Anspruch 7, wobei das Herstellungsverfahren außerdem einen Schritt des Formens des erhaltenen Pulvers zum Erhalt eines Rohmaterials umfasst.

9. Herstellungsverfahren nach Anspruch 8, wobei der Formungsschritt durch Knetextrusion oder Vertropfung erfolgt.

10. Herstellungsverfahren nach Anspruch 8 oder 9, wobei das geformte Rohmaterial dann einem Wärmebehandlungsschritt bei einer Temperatur zwischen 500 und 1000 °C über einen Zeitraum zwischen 2 und 10 min, gegebenenfalls in Gegenwart eines Luftstroms, der bis zu 60 Vol.-% Wasser enthält, unterworfen werden kann.

## Claims

1. Process for the preparation of an alumina gel in a single precipitation step a), said precipitation step consisting in dissolving an acidic aluminium precursor, aluminium chloride, in water, at a temperature in the range 10°C to 90°C, in a manner such that the pH of the solution is in the range 0.5 to 5, for a period in the range 2 to 60 minutes, then adjusting the pH to a pH in the range 7.5 to 9.5 by adding a basic precursor, sodium hydroxide, to the solution obtained in order to obtain a suspension, at a temperature in the range 5°C to 35°C, and for a period in the range 5 minutes to 5 hours, and a filtration step b) for filtering the suspension obtained at the end of step a), said process not comprising any steps for washing the precipitate obtained at the end of the filtration step b).

2. Process according to Claim 1, in which the acidic aluminium precursor, aluminium chloride, AlCl₃, is dissolved in water, at a temperature in the range 10°C to 75°C.

3. Process according to either of Claims 1 and 2, in which the pH of the solution of aluminium chloride, AlCl₃, in water, is in the range 1 to 4.

4. Process according to one of the preceding claims, in which the pH is adjusted at a temperature in the range 10°C to 30°C.

5. Preparation process according to Claim 4, in which the pH is adjusted at a temperature in the range 10°C to 25°C.

6. Preparation process according to one of the preceding claims, in which the pH is adjusted to a pH in the range 7.7 to 8.8.

7. Preparation process according to one of the preceding claims, in which the preparation process also comprises a drying step for drying the filtered suspension obtained at the end of the precipitation step in order to obtain a powder, said drying step being carried out by drying at a temperature of 100°C or more or by spray-drying.

8. Preparation process according to Claim 7, in which the preparation process also comprises a shaping step for shaping the powder obtained in order to obtain a raw material.

9. Preparation process according to Claim 8, in which the shaping step is carried out by mixing-extrusion or by oil-drop.

10. Preparation process according to either of Claims 8 and 9, in which the shaped raw material may then undergo a heat treatment step at a temperature in the range 500°C to 1000°C, for a period in the range 2 to 10 h, in the presence or absence of a stream of air containing up to 60% by volume of water.
